# EUROPÄISCHE PATENTSCHRIFT

(11) **EP 0 483 110 B1**
(45) Veröffentlichungstag und Bekanntmachung des Hinweises auf die Patenterteilung: **07.02.1996**
(21) Anmeldenummer: 92101153.2
(22) Anmeldetag: 29.11.1987
(51) Int. Cl.: E21B 43/12, E21B 43/04, E03B 3/12

(54) **Verfahren und Vorrichtung zum Herstellen eines Brunnens**
Method and device for making a well
Procédé et dispositif pour réaliser un puits

(30) Priorität: 03.12.1986 DE 3641306; 23.04.1987 DE 3713577
(43) Veröffentlichungstag der Anmeldung: 29.04.1992
(62) Teilanmeldung aus: 87907739.4
(73) Patentinhaber: Universale-Bau GmbH, D-81319 München (DE)
(72) Erfinder: Grotendorst, Gerhard, W-4280 Borken 4 (DE)
(74) Vertreter: Herrmann-Trentepohl, Werner, Dipl.-Ing.

(56) Entgegenhaltungen:
- DE-A- 3 147 935
- US-A- 3 548 935
- US-A- 4 366 862

## Beschreibung

Die Erfindung bezieht sich auf ein Verfahren zum Herstellen eines Brunnens gemäß dem Oberbegriff des Hauptanspruches 1. Ferner bezieht sich die Erfindung auf eine Absperr -und Auffang vorrichtung nach dem Oberbegriff des Nebenanspruches 5.

Die erfindungsgemäße Gattung gehört zum Stand der Technik (DE-A-35 12 709). Daraus ist die Herstellung des Brunnens in nicht ohne weiteres standfesten Gesteinen bekannt und zwar mit Hilfe eines Bohrloches, das nach dem Spülbohrverfahren hergestellt wird. Bei dem bekannten Verfahren wird zwischen einem im Bereich eines Filterrohrabschnittes - im folgenden vereinfacht "Filterrohr" genannt - eingebrachten Filterkies und dem restlichen Teil des Ringraumes zwischen Aufsatzbohrabschnitt - im folgenden vereinfacht "Aufsatzrohr" - und der Bohrlochinnenwand eine pumpfähige, dauerplastische oder dauerelastische Dichtung eingefüllt wird und der Ringraum zwischen dem Aufsatzrohr und der Bohrlochinnenwandung zum Zwecke der Probeentnahme verfüllt und abgedichtet.

Mit dem vorbekannten Verfahren wird erreicht, daß eine Wasserentnahme nur im Bereich des eigentlichen Filterrohres erfolgen kann und daß gegebenenfalls oberhalb des Filterrohres anstehende, wasserführende Schichten durch die Abdichtung des zwischen Aufsatzrohr und Bohrlochinnenwandung liegenden Ringraumes hermetisch und hydraulisch gegenüber den Öffnungen des Filterrohres abgeschlossen werden.

Die bekannte Verfahrensweise hat den Nachteil, daß es bei Anwendung des Spülbohrverfahrens nicht möglich ist, die Wasserentnahme nur in belastungsarmen, wasserführenden Gesteinsabschnitten durchzuführen. Wenn nämlich das Filterrohr in einem wasserführenden Abschnitt angeordnet ist, der noch mit Schadstoffen belastet ist, muß das gesamte Bohrloch aufgebohrt werden. Dazu müssen vorher Filterrohre und Aufsatzrohre gezogen werden. Das Ziehen der Aufsatzrohre ist aber so gut wie unmöglich, da aufgrund der Reibung zwischen dem den Ringraum verfüllenden Dichtmaterial und der Außenseite der Aufsatzrohre ein Widerstand gegen die Zugbewegung entsteht, der die Rohre normalerweise zerstört.

Es ist jedoch auch bekannt (US-A-4 366 862), im standfesten Gebirge über im Abstand angeordnete, gegen die Bohrlochwandung anpreßbare Packer eine unterirdische Zone zu begrenzen, um eine Flüssigkeitsprobe aus dem Gebirge zu entnehmen. Packer sind nur im standfesten Gebirge einsetzbar. Im nicht standfesten Gebirge, wo mit Spülflüssigkeit des Zusetzens zur Stabilisierung der Bohrlochwandung gearbeitet werden muß, zerstören Packer nicht nur die auf der Bohrlochwandung sitzende Stabilisierungsschicht, sondern auch die Bohrlochwandung selbst.

Aus US-A-43 66 862 ist ebenfalls bekannt, einen bestimmten Abschnitt des Bohrloches durch zwei oder mehrere mittels Fluiddruck aufblasbare ballonartige Einrichtungen zu begrenzen und gegen die übrigen Bohrlochräume abzudichten. Solche Einrichtungen sind gegenüber Beschädigungen empfindlich und deshalb störanfällig.

Der Erfindung liegt demgegenüber die Aufgabe zugrunde, ein zuverlässiges Verfahren und eine Vorrichtung zur Herstellung eines Brunnens zu entwickeln, mit welchen in beliebigen Horizonten und während des Abteufens das Bohrloch überprüft werden kann, um zu erreichen, daß das endgültige Filterrohr nur in dem Abschnitt angeordnet wird, der tatsächlich den Qualitätsanforderungen entsprechendes Wasser führt und um eine ständige Bestimmung von physikalischen und mikrobakteriologischen Wasserparametern, sowie von hydrogeologischen Gesteinsparametern während der Bohrarbeit zu ermöglichen.

Diese der Erfindung zugrundeliegende Aufgabe wird durch die Lehren des Hauptanspruches 1 und des Nebenanspruches 5 gelöst.

Vorteilhafte Ausgestaltungen des erfindungsgemäßen Verfahrens sind in den Unteransprüchen erläutert.

Gemäß der Erfindung wird so vorgegangen, daß mit dem Bohrwerkzeug eine ein- oder mehrfache Absperroder Auffangvorrichtung verbunden ist, die den Ringraum zwischen Bohrgestängeaußenwand und Bohrlochinnenwand mittels radial ausfahrbarer Lamellen segmentringscheiben möglichst dicht verschließt. Sodann wird auf die Absperr- und Auffangvorrichtung jeweils eine entsprechende Sandkornschüttung aufgebracht, die aus der im Hauptanspruch angegebenen Korngröße besteht. Das so geschaffene Filtermedium reicht über das obere Ende des Filterrohres und das untere Ende des Aufsatzrohres um ein gewisses Maß hinaus. An diese Schüttung schließt sich in dem Ringraum zwischen Aufsatzrohr und Bohrlochwand nur die Spülflüssigkeit aus dem Bohrvorgang an.

Wird die Pumpeinrichtung in Betrieb genommen, so wird aus dem Filterrohr, das als Hilfsfilterrohr anzusehen ist, das Wasser abgezogen. Hierbei bewirkt die feinkörnige, aber noch ausreichend wasserdurchlässige Schüttung im Ringraum zwischen Filterrohr und Bohrlochinnenwand eine ausreichende Abdichtung am oberen Ende des Filtermediums. Diese Abdichtung wird dadurch erreicht, daß sedimentierende Feststoffe, teils Zusätze der Spülflüssigkeit, teils Abrieb von Feinteilen aus der Bohrlochwandung den oberen Bereich der Schüttung zusetzen, der dadurch wasserundurchlässig wird, während die übrigen Bereiche wasserdurchlässig bleiben. Deshalb kann nun das zu untersuchende Wasser aus dem anstehenden wasserführenden Horizont der Filterschicht durchdringen, ohne daß eine hydraulische Verbindung zwischen dieser Wasserschicht und dem oberen Bereich des Bohrloches, in dem die Aufsatzrohre mit der Spülflüssigkeit vorhanden sind, eintreten kann.

Mit den Merkmalen des Anspruches 2 kann mit der Analyse des abgezogenen Wassers begonnen werden, sobald das Wasser ausreichend gereinigt ist.

Bei dem dargestellten Ausführungsbeispiel sind in ein Bohrloch 2a verbunden mit dem Gestänge 15 für einen Bohrmeißel 16 Absperr- und Auffangvorrichtungen 17 und 18 angeordnet, die eine Abdichtung gegenüber der Bohrlochwandung 6a bewirken.

Zum Beispiel nach Anheben des Bohrgestänges 15 um ein entsprechendes Maß von beispielsweise 1 bis 2 m können die Absperrvorrichtungen 17 und 18 ausgefahren werden und pressen sich in die Bohrlochwandung 6a.

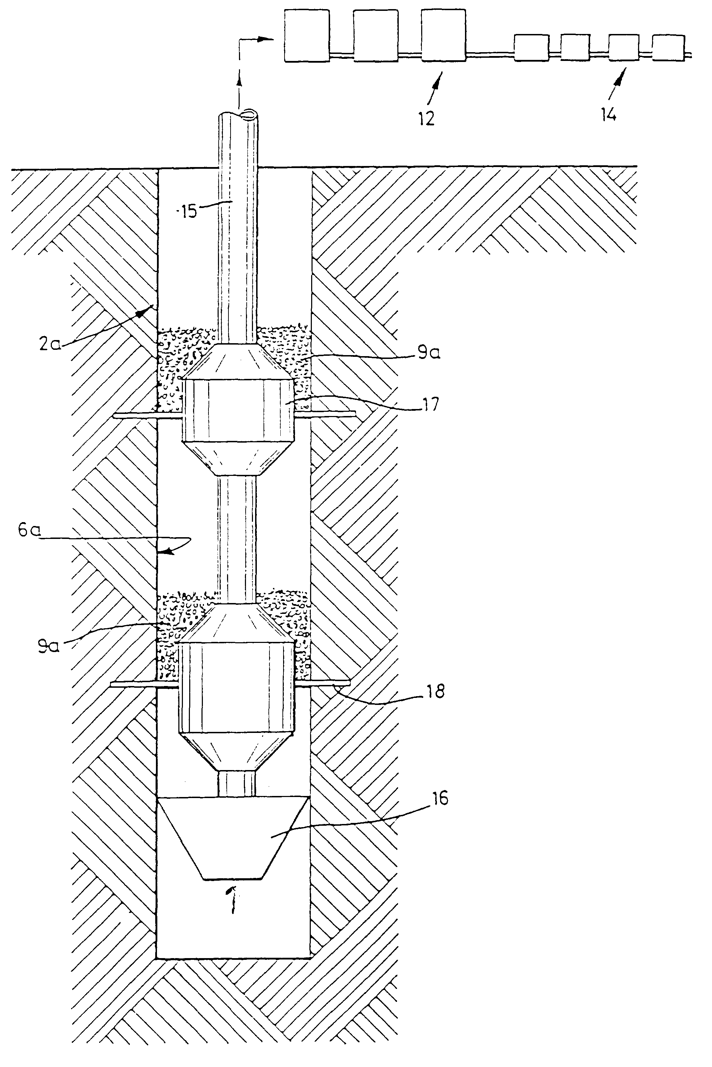

Diese Absperr- und Auffangvorrichtungen 17 und 18 sind als mechanische Einrichtungen ausgebildet, die beispielsweise über ein Hilfsgetriebe ausgefahren werden. Solche mechanischen Einrichtungen sind in der Zeichnung wiedergegeben und können aus dünnen, scheibenartigen Segmentteilen bestehen, die durch entsprechende Drehung über das Bohrlochgestänge in das umgebende Gestein der Bohrlochwandung eingepreßt werden. Bei der Entnahme des Wassers unterhalb der Absperr- und Auffangvorrichtung 17 und 18 wird sichergestellt, daß nur das Wasser gefördert wird, das im Bereich unterhalb der Absperr- und Auffangvorrichtung anströmt, wobei der Bohrmeißel 16 und das Gestänge 15 als Förderleitung ausgebildet sind.

Der Abstand der Absperr- und Auffangvorrichtungen 17 und 18 kann unter Anpassung an die örtlichen Gebirgsverhältnisse getroffen werden.

Wie in der Zeichnung dargestellt, wird auf die Absperr- und Auffangvorrichtung 17 bzw. 18 jeweils eine entsprechende Sandkornschüttung 9a bzw. 9b aufgebracht, wobei diese Schüttung aus einer Korngröße von 0,3 bis 0,7 bzw. 0,7 bis 1,2 mm besteht.

Bei der Inbetriebnahme der Pumpeinrichtung wird das Grundwasser teils mit Spülflüssigkeit und anteiligen Feinstteilen vermischt, kontinuierlich abgesogen und, sobald das Wasser ausreichend gereinigt ist, kann mit der Analyse begonnen werden. Vorzugsweise erfolgt dann die Überprüfung durch elektronische bzw. chemische Meßeinrichtungen.

Um einen gewollten Druck auf die Absperr- und Auffangvorrichtung 17 und 18 und einen hydraulischen Kurzschluß mit wasserführenden Nachbarschichten zu vermeiden, ist je nach Ausbildung des anstehendenen Gebirges die Entnahme der Wassermenge unterhalb der Absperr- und Auffangvorrichtung 17 und 18 zu begrenzen. Nach dem Ausführungsbeispiel sollen nur Probeuntersuchungen durchgeführt werden, um damit festzustellen, ob der jeweils angefahrene Gebirgshorizont einwandfreies und zufriedenstellendes Wasser liefert.

Die so gewonnene Wasseranalyse aus beliebiger Bohrtiefe gibt exakt die zur Beurteilung ausgewählten physikochemischen und makrobakteriologischen Wasserparameter des Wasserhorizontes wieder, aus dem sie gewonnen wurde. Eine Vermischung des Grundwassers mit Wasser aus anderen Wasserhorizonten ist aufgrund der vorgesehenen Absperrung und der geringen Entnahme nicht möglich.

Um ein Zusammenbrechen der Bohrlochwandung 6a zu verhindern, kann während der Wasserentnahme unterhalb der Absperr- und Auffangvorrichtung 17 und 18 je nach anstehendem Gebirge die Bohrlochwandung mit bekannten Spülungszusätzen stabilisiert werden.

## Patentansprüche

1. Verfahren zur Herstellung eines Brunnens, für den ein Bohrloch abgeteuft wird, in welches eine Abpumpvorrichtung bis zu dem Erdhorizont eingesetzt wird, aus welchem Wasser entnommen werden soll, wobei in einem von der Bohrlochwandung (6a) begrenzten Ringraum ein Filtermedium (9a) verfüllt und auf dessen oberer Oberfläche eine Dichtschicht gebildet wird, welche das Eindringen von Wasser durch den Brunnen von oben in den ausgewählten Erdhorizont verhindert, dadurch gekennzeichnet, daß mit dem Bohrwerkzeug eine einoder mehrfache Absperr- und Auffangvorrichtung (17, 18) in das Bohrloch eingeführt wird, deren Segmentteile in die Bohrlochwand eingeführt werden und auf die jeweils eine als Filtermedium (9a) dienende Sandkornschüttung aufgebracht wird, die eine Korngröße von 0,3 bis 0,7 bzw. 0,7 bis 1,2 aufweist, wobei mit Inbetriebnahme der Pumpeinrichtung das jeweils mit Spülflüssigkeit und anteiligen Feinstteilen vermischte Grundwasser kontinuierlich abgezogen wird.

2. Verfahren nach Anspruch 1, dadurch gekennzeichnet, daß die Grundwasserentnahme unterhalb der Absperr- und Auffangvorrichtung (17, 18) auf Mengen begrenzt wird, welche die Beurteilung der physikochemischen und makrobakteriologischen Wasserparameter des Wassergewinnungshorizontes wiedergeben.

3. Verfahren nach einem der Ansprüche 1 oder 2, **dadurch gekennzeichnet,** daß die Absperr- und Auffangvorrichtung pneumatisch, hydraulisch oder elektrisch ein- und ausfahrbar ist.

4. Verfahren nach einem der Ansprüche 1 bis 3, **dadurch gekennzeichnet,** daß das Bohrwerkzeug während einer Probeentnahme bei in Längsachse des Bohrloches gesehen abgesperrtem Bohrloch im Bohrloch verbleibt und das Bohrgestänge als Förderleitung dient.

5. Absperr- und Auffangvorrichtung zur Wasserentnahme aus einem ausgewählten Endhorizont in einem Brunnenbohrloch, die innerhalb des Bohrgestängenzuges oberhalb des Bohrwerkzeuges angeordnet ist, umfassend mindestens zwei Abdichteinrichtungen (17, 18), die einen bestimmten vertikalen Abstand zueinander aufweisen und radial zur Bohrlochwand abdichten, sowie ein zwischen diesen Einirichtungen (17, 18) befindliches Filterrohr, **dadurch gekennzeichnet,** daß die Abdichteinrichtungen als Lamellensegmentringscheiben ausgebildet sind, wobei die Lamellensegmente über ein Hilfsgetriebe ausfährbar und in die umgebende Bohrlochwandung einführbar sind.

6. Vorrichtung nach Anspruch 5, **dadurch gekennzeichnet,** daß der Abstand zweier Absperreinrichtungen etwa 1 bis 3 m beträgt.

## Claims

1. Method for making a well for which a well hole is sunk into which a pump-out device is inserted until the ground horizon, from which water is to be taken, wherein a filter medium (9a) is filled into an annular space defined by the well hole wall (6a) and on the upper surface of which a watertight layer preventing water from entering the selected ground horizon from top through the well is formed, **characterized in that** together with the drilling tool a single or multiple blocking and collecting device (17, 18) is inserted into the well hole, wherein the segmental parts thereof are introduced into the well hole wall and onto which a granule bottoming serving as filter medium is applied, said granule bottoming having a particle size from 0.3 to 0.7 or 0.7 to 1.2, respectively, wherein with starting of the pump device the groundwater respectively mixed vith drilling fluid and percentage of finest particles is withdrawn continuously.

2. Method as defined in claim 1, **characterized in that** taking of groundwater below the blocking and collecting device (17, 18) is limited to amounts which reproduce the judgement of the physico-chemical and macro-bacteriological parameters of the water of the water procurement horizon.

3. Method as defined in one of claims 1 or 2, **characterized in that** the blocking and collecting device can be retracted or extended pneumatically, hydraulically or electrically.

4. Method as defined in one of claims 1 to 3, **characterized in that** the drilling tool remains in the well hole during taking of a sample with tile well hole being blocked with respect to the longitudinal axis of the well hole and that the drilling pipes are used as delivery pipe.

5. Blocking and collecting device for taking water from a selected ground horizon in a well bore hole, arranged wihin the drilling pipe stnng above the drilling tool, including at least two sealing devices (17, 18) having a given vertical distance from one another and radially sealing with respect to the well hole wall, as well as a filter pipe located between these devices (17, 18), **characterlzed in that** the sealing devices are built as laminated segment annular disks, wherein the laminated segments can be extended by means of an assistant drive and can be inserted into the surrounding well hole wall.

6. Device as defined in claim 5, **characrerized in that** the distante between two blocking devices amounts to 1 to 3 m approximately.

## Revendications

1. Procédé pour réaliser un puits, pour lequel une forure est creusée, dans laquelle un dispositif d'évacuation par pompe est inséré jusqu'à l'horizon de terre, de laquelle eau faudrait être prélevée, un élément filtrant (9a) étant rempli dans un espace annulaire limité par la paroi de forure (6a) et une couche étanche étant formée sur la surface supérieure de ledit élément, ladite couche empéchant de l'eau de pénétrer de haut dans l'horizon de terre choisi par le puits, **caractérisé en ce qu'**avec un outil de forage un simple ou multiple dispositif d'arrêt et collecteur (17, 18) est inséré dans le forure, les parties de segment dudit dispositif étant insérées dans la paroi de forure et un remblai de grains de sable servant comme élément filtrant (9a) et ayant une grosseur de grain de 0,3 à 0,7 ou 0,7 à 1,2 respectivement, étant épande sur chaqu'une desdits parties, l'eau souterraine mêlée avec du liquide de forage et avec de grain très fin respectivement, étant soutirée continuellement avec la mise en marche du dispositif de pompe.

2. Procédé selon revendication 1, **caractérisé en ce que** la prise d'eau souterraine au-dessous du dispositif d'arrêt et collecteur (17, 18) est limitée à des quantités reproduisants un jugement de les paramètres physico-chimiques et macro-bactériologiques d'eau de l'horizon de prise d'eau.

3. Procédé selon quelconque des revendications 1 ou 2, **caractérisé en ce que** le dispositif d'arrêt et collecteur est insérable et déployable en manière pneumatique, hydraulique ou électrique.

4. Procédé selon **quelconque** des revendications 1 ou 3, **caractérisé en ce que** l'outil de forage reste dans la forure pendant un prélèvement des échantillons, avec la forure étant arrêtée, vue dans l'axe longitudinal de forure, et que les tiges de forage servent comme conduite de refoulement.

5. Dispositif d'arrêt et collecteur pour le prélèvement d'eau d'une horizon choisie de terre dans une forure de puits, placé dans le train des tiges au-dessus d'outil de forage, comportant au moins deux dispositifs d'étanchement (17, 18) ayant une distance verticale définie l'un de l'autre et étanchant radiallement à la paroi de forure, et même un tuyau-filtre placé entre lesdits dispositifs (17, 18), **caractérisé en ce que** les dispositifs d'étanchement sont formés comme plaques annulaires segmentées lamellairement, les segments lamellaires étants déployables par une transmission auxiliaire et insérables dans la paroi ambiante de forure.

6. Dispositif selon revendication 5, **caractérisé en ce que** la distance entre deux dispositifs d'arrêt est 1 à 3 m approximativement.
